# EUROPEAN PATENT APPLICATION

(11) **EP 3 163 886 A1**
(43) Date of publication of application: **03.05.2017**
(21) Application number: 16750596.5
(22) Date of filing: 17.05.2016
(51) Int. Cl.: H04N 21/41, H04N 21/4402, H04N 21/485

(54) **AUDIO AND VIDEO PLAYBACK DEVICE, DATA DISPLAY METHOD, AND STORAGE MEDIUM**

(30) Priority: 21.08.2015 CN 201510520563
(71) Applicant: LE Holdings (Beijing) Co., Ltd., Beijing 100025 (CN); Le Shi Zhi Xin Electronic Technology (Tianjin) Limited, Tianjin 300467 (CN)
(72) Inventor: LIU, Wei, Tianjin 300467 (CN)
(74) Representative: Cohausz & Florack
(86) International application number: PCT/CN2016/082402
(87) International publication number: WO 2017/032081

(57) **Abstract**

Embodiments of the disclosure provide an audio and video playing device, a data displaying method, and a storage medium, and the audio and video playing device includes a processor, a video format converter, and a display screen, wherein the processor is configured to generate screen menu data, and transmit the generated screen menu data to the video format converter; the video format converter coupled with the processor is configured to superimpose the screen menu data output by the processor onto a received external video signal from a video signal source external to the processor, convert a superimposed signal into a converted signal which format can be identified by the display screen, and transmit the converted signal to the display screen; and the display screen is configured to display the received signal. The video format converter superimposes the screen menu data generated by the processor onto the external video signal , converts the superimposed signal into the signal which format can be identified by the display screen, and then transmits the format-converted signal to the display screen, so that both the external video signal and a screen menu can be displayed while displaying the external video signal.

## Description

### CROSS-REFERENCE TO RELATED APPLICATIONS

This disclosure claims the benefit of Chinese Patent Application No. 201510520563.8, filed with SIPO on August 21, 2015 and entitled "Audio and video playing device", which is hereby incorporated by reference in its entirety.

### TECHNICAL FIELD

The present disclosure relates to the field of multimedia technologies, and particularly to an audio and video playing device, a data displaying method, and a storage medium.

### BACKGROUD

An intelligent video processor in an existing audio and video playing device (e.g., an intelligent TV set) can superimpose screen menu data onto a video signal, and then transmit the video signal onto which the screen menu data are superimposed to a display screen for displaying, but the processing capacity of the processor in the existing audio and video playing device is so low that a demand of its user is usually not satisfied.

The dominant frequency of a processor, and the number of bits in a register in the processor of some high-performance audio and video playing device, e.g., a computer, a mobile phone, etc., are higher and more than a general processor (for example, if the number of bits in a register in the general processor is 32 bits, and the dominant frequency of the general processor is 1.2 GHz, then the number of bits in the register in the processor of the high-performance audio and video playing device is 64 bits, and the dominant frequency of the general processor is 2 to 2.5 GHz as opposed thereto), so the processor of the high-performance audio and video playing device has a higher capacity of playing a high-definition video or running large game. However, if an external video signal from another video signal source than the processor in such an audio and video playing device is played on the audio and video playing device, then it may be impossible to display both the external video signal and the screen menu while an effect of playing the audio and the video needs to be adjusted.

### SUMMARY

Embodiments of the disclosure provide an audio and video playing device, a data displaying method, and a storage medium so as to address the problem in the prior art of the impossibility to display both the external video signal and the screen while playing the external video signal on the high-performance audio and video playing device.

An embodiment of the disclosure provides an audio and video playing device including a processor, a video format converter, and a display screen, wherein the processor is configured to generate screen menu data, and output the generated screen menu data to the video format converter; the video format converter coupled with the processor is configured to superimpose the screen menu data output by the processor onto a received external video signal from a video signal source external to the processor, convert the superimposed signal into a converted signal which format can be identified by the display screen, and transmit the converted signal to the display screen; and the display screen is configured to display the received signal.

An embodiment of the disclosure provides a data displaying method including:
receiving an external video signal from a video signal source external to an audio and video playing device; superimposing the external video signal onto screen menu data generated by the audio and video playing device to generate a superimposed signal, converting the format of the superimposed signal; and displaying the superimposed signal after format converted.

An embodiment of the disclosure provides another audio and video playing device including a processor and a memory, wherein the memory stores therein program for performing the steps of:
receiving an external video signal from a video signal source external to an audio and video playing device; superimposing the external video signal onto screen menu data generated by the audio and video playing device to generate a superimposed signal, converting the format of the superimposed signal; and displaying the superimposed signal after format converted;
the processor is configured to perform the program stored in the memory.

An embodiment of the disclosure provides a storage medium storing therein program for performing the data displaying method according to the embodiment above of the disclosure.

With the audio and video playing device, the data displaying method, and the storage medium according to the embodiments of the disclosure, the screen menu data are superimposed onto the external video signal, and the superimposed signal is converted into the signal in the format which can be identified by the display screen, and then transmitted to the display screen, that is, the format of the superimposed signal is converted, and the format-converted signal is displayed, so that both the external video signal and a screen menu can be displayed while playing the external video signal.

### BRIEF DESCRIPTION OF THE DRAWINGS

In order to make the technical solutions according to the embodiments of the disclosure or in the prior art more apparent, the drawings to which a description of the embodiments or the prior art refers will be briefly introduced below, and apparently the drawings to be described below are merely illustrative of some of the embodiments of the disclosure, and those ordinarily skilled in the art can derive from these drawings other drawings without any inventive effort. In the drawings:
Fig.1 is a first schematic structural diagram of an audio and video playing device in accordance with some embodiments of the disclosure;
Fig.2 is a second schematic structural diagram of an audio and video playing device in accordance with some embodiments of the disclosure;
Fig.3 is a third schematic structural diagram of an audio and video playing device in accordance with some embodiments of the disclosure; and
Fig.4 is a fourth schematic structural diagram of an audio and video playing device in accordance with some embodiments of the disclosure

### DETAILED DESCRIPTION

In order to make the objects, technical solutions, and advantages of the embodiments of the disclosure more apparent, the technical solutions according to the embodiments of the disclosure will be described below clearly and completely with reference to the drawings in the embodiments of the disclosure, and apparently the embodiments described below are only a part but not all of the embodiments of the disclosure. Based upon the embodiments here of the disclosure, all the other embodiments which can occur to those skilled in the art without any inventive effort shall fall into the scope of the disclosure.

An audio and video playing device according to an embodiment of the disclosure is configured to transmit a video signal to a display screen, where the audio and video playing device can include but will not be limited to a TV set, e.g., an intelligent TV set, and this is merely exemplary but not intended to limit the disclosure thereto.

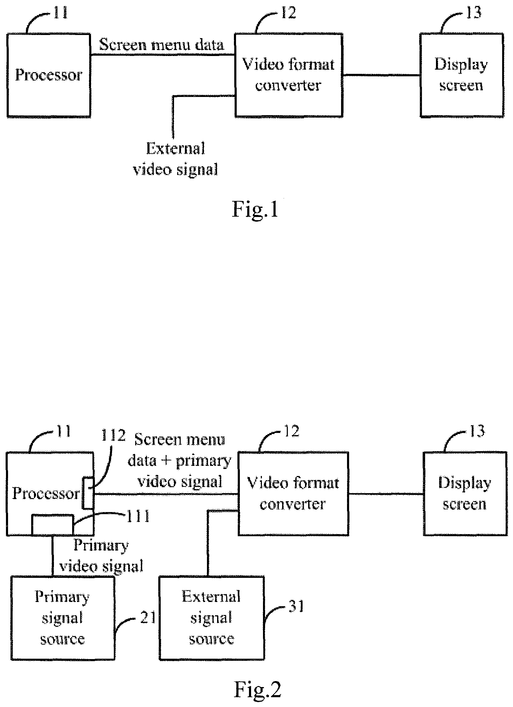

As illustrated in Fig.1, an audio and video playing device according to an embodiment of the disclosure includes a processor 11, a video format converter 12, and a display screen 13, where:
The processor 11 is configured to generate screen menu data, and transmit the generated screen menu data to the video format converter 12;
The video format converter 12 coupled with the processor 11 is configured to superimpose the screen menu data output by the processor 11 onto a received external video signal from another video signal source than the processor 11, convert the superimposed signal into a converted signal which format can be identified by the display screen 13, and transmit the converted signal to the display screen 13; and
The display screen 13 is configured to display the received signal.

Here the display screen 13 can include but will not be limited to a multimedia device in the audio and video playing device, or can be a multimedia device attachable to the audio and video playing device.

The audio and video playing device according to an embodiment of the disclosure can be further configured with one of an Ethernet module, a wired and/or wireless communication module (e.g., a Bluetooth module, a Wireless Fidelity (WiFi) module, a 2.4G communication module, etc.), a power source management module, a memory module, and a combination thereof, all of which are connected with the processor 11.

As illustrated in Fig.2, the processor 11 in the audio and video playing device according to an embodiment of the disclosure is electrically provided with a first video format input interface 111, and at least one video format output interface 112, wherein the first video format input interface 111 coupled with a primary signal source 21 is configured to superimpose the screen menu data generated by the processor 11 onto a primary video signal of the primary signal source 21, and output the primary video signal onto which the screen menu data are superimposed to the video format converter 12 via a video format output interface 112; and

The video format converter 12 is further configured to convert the superimposed signal output from the processor 11 into a converted signal which format can be identified by the display screen 13, and transmit the converted signal to the display screen 13.

Here the primary signal source 21 can include but will not be limited to a TV signal source; and the primary video signal can include a video signal transmitted by the audio and video playing device illustrated in Fig.2 from one of the Ethernet module and the wired and/or wireless communication module in the audio and video playing device to the processor 11, or video data read by the processor 11 from the memory module, etc. Moreover the processor 11 is further configured to superimpose the generated screen menu data onto the primary video signal, and then transmit the primary video signal onto which the screen menu data are superimposed to the video format converter 12. The processor 11 generates the screen menu data, and outputs the screen menu data to the video format converter 12 via any one video format output interface thereof.

Here the video format output interface 112 can include but will not be limited to one of a Mobile High-definition Link (MHL) interface, a High Definition Multimedia Interface (HDMI), a Low Voltage Differential Signaling (LVDS) interface, a Display Port (DP), an Embedded Display Port (EDP), a Mobile Industry Processor Interface-Display Serial Interface (MIPI DSI), a Transistor-Transistor Logic (TTL) interface, and a combination thereof.

The processor 11 includes a processing module, and a screen display option functional module, where the processing module includes a Central Processing Unit (CPU) and/or a Graphic Processing Unit (GPU). The processing module can output the primary video signal, and the screen display option functional module is configured to generate the screen menu data in response to a received operational instruction.

The screen display option functional module in the processor 11 generates the corresponding screen menu data in response to the received operational instruction. For example, if a menu needs to be accessed, then the screen display option functional module in the processor 11 will generate screen menu option data in response to an external input instruction, and if the audio and video playing device according to the embodiment of the disclosure is a TV set, then a functional instruction requesting for displaying a control menu will be transmitted to the screen display option functional module in the processor 11 through a remote controller, the screen display option functional module in the processor 11 will generate corresponding screen menu data in response to the functional instruction, and the processor 11 will transmit the screen menu data to the video format converter 12, or the processing module in the processor 11 will superimpose the screen menu data onto the primary video signal of the primary signal source 21, and then transmit the primary video signal onto which the screen menu data are superimposed, to the video format converter 12.

If the superimposed video signal in the video format converter 12 is in a first video format, e.g., the HDMI format, where the superimposed video signal in the video format converter 12 can be the video signal generated by the video format converter 12 superimposing the external video signal onto the screen menu data, or the superimposed video signal received by the video format converter 12, output by the processor 11, and the format of the video signal which can be identified by the display screen is a second video format, e.g., the V-by-One format, then the video format converter will transmit the video signal to the display screen only after converting the data in the first video format into data in the second video format. As can be appreciated, if the first video format is the same with the second video format, then the video format converter need not convert the video formats.

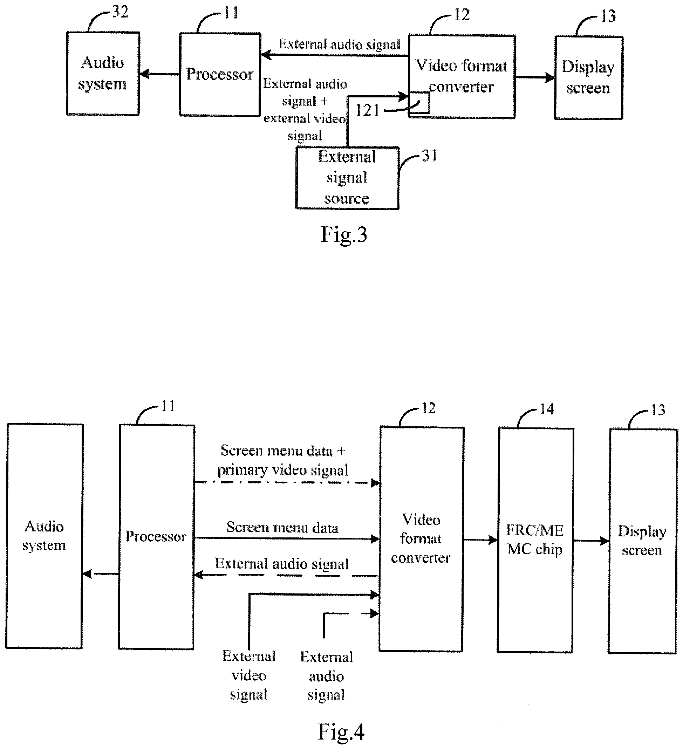

As illustrated in Fig.3, the video format converter 12 in the audio and video playing device according to an embodiment of the disclosure is electrically provided with an external audio and video input interface 121, coupled with the external signal source 31, configured to receive an external audio signal and the external video signal from the external signal source 31.

The video format converter 12 transmits the received external audio signal to the processor 11, and in Fig.3, the processor 11 is further coupled with an audio system 32 configured to play a primary audio signal of the primary signal source and/or the external audio signal, where the audio system 32 can include but will not be limited to a multimedia device in the audio and video playing device, or can be a multimedia device attachable to the audio and video playing device.

The screen menu data generated by the processor 11 are superimposed by the video format converter 12 onto the external audio signal from the external signal source 31, and the superimposed signal is converted into a converted signal which format can be identified by the display screen 13, e.g., V-by-One, and output to the display screen 13 for displaying.

Of course, if audio data are transmitted from one of the Ethernet module and the wired and/or wireless communication module configured in the audio and video playing device, or read by the processor 11 from the memory module, then the audio data will be played directly by the processor 11 and the audio system 32 in the audio and video playing device.

In other words, if the video format converter 12 receives the external video signal, then if the processor 11 generates and outputs the screen menu data to the video format converter 12, then the video format converter 12 will superimpose the received screen menu data onto the external video signal, convert the superimposed signal into a converted signal which format can be identified by the display screen 13, and then transmit the converted signal to the display screen 13. If the video format converter 12 does not receive any external video signal, then the processor 11 will superimpose the generated screen menu data directly onto the primary video signal, and transmit the superimposed signal to the video format converter 12, and the video format converter 12 will convert the received superimposed signal into a converted signal which format can be identified by the display screen 13, and then transmit the format-converted signal to the display screen 13. The video format converter 12 transmits the received external audio signal to the processor 11 upon reception of the external audio signal, and the external audio signal is played by the processor 11 and the audio system 32 in the audio and video playing device. The audio signal from the primary signal source is transmitted by the processor 11 coupled with the primary signal source to the audio system 32, and thereby played.

Here the processor 11 can transmit the screen menu data to the video format converter 12 via a Universal Serial Bus (USB) interface, e.g., USB 3.1, or via an HDMI, or another interface as long as the screen menu data can be identified by the video format converter 12.

If the processor 11 transmits the screen menu data to the video format converter 12 via an USB interface, then the video format converter 12 can be electrically arranged thereon with two HDMIs, where the video format converter 12 receives the signal, output by the processor 11, as a result of superimposing the primary video signal onto the screen menu data via one of the HDMIs, and receives the external video signal and the external audio signal output by the external signal source 31 via the other HDMI.

If the processor 11 transmits the screen menu data to the video format converter 12 via an HDMI, then the video format converter 12 can be electrically arranged thereon with three HDMIs, where the video format converter 12 connected with the processor 11 via one of the HDMIs is configured to receive the screen menu data output by the processor 11, or receive the signal, output by the processor 11, as a result of superimposing the screen menu data, onto the primary video signal and the video format converter 12 receives the external video signal and the external audio signal output by the external signal source 31 via the other two HDMIs.

The external audio and video input interface 121 in the video format converter 12 can include but will not be limited to one of an MHL interface, an HDMI, an LVDS interface, a DP interface, an EDP interface, an MIPI DSI, a TTL interface, and a combination thereof.

The format which can be identified by the display screen 13 can be V-by-One.

If the audio and video playing device according to an embodiment of the disclosure further includes a Frame Rate Conversion/Motion Estimation and Motion Compensation (FPC/MEMC) chip, the audio and video playing device according to an embodiment of the disclosure may be as illustrated in Fig.4.

In the audio and video playing device illustrated in Fig.4, the FRC/MEMC chip 14 connected between the video format converter 12 and the display screen 13 is configured to receive the format-converted video signal from the video format converter 12, and convert the frame rate of the format-converted video signal under the motion detection and motion compensation principles to thereby convert the received video signal into a high-resolution and high-frame-rate video signal, for example, to improve the refresh rate of the video signal from a normal 60Hz refresh rate to a 120 or 240Hz refresh rate; or convert the resolution of the received video signal, where if the resolution of the received video signal is the highest resolution, then the resolution thereof will not be converted; otherwise, the resolution thereof will be converted into the highest resolution. For example, if there is a 4K*2K resolution of the input external video signal, then the resolution will not be converted; and if there is only a 1080P resolution of the input external video signal, then the resolution will be converted into 4K*2K resolution. Then the high-resolution and high-frame-rate video signal is transmitted to the display screen 13 for displaying to thereby improve the resolution of a moving picture.

In the audio and video playing device illustrated in Fig.4, the external audio signal received by the video format converter 12 is processed as represented by dotted lines. The external video signal and the screen menu data received by the video format converter 12 are processed as represented by solid lines, where the video format converter 12 superimposes the screen menu data output by the processor 11 onto the received external video signal, converts the superimposed signal into the signal which format can be identified by the display screen 13, and then transmits the format-converted signal to the display screen 13 through the FRC/MEMC chip 14. The video signal, output by the processor 11 to the video format converter, as a result of superimposing the screen menu data onto the primary signal is processed as represented by dot-dashed lines, where the video format converter converts the primary video signal onto which the screen menu data are superimposed into the signal in the format which can be identified by the display screen 13, and the signal is processed by the FRC/MEMC chip 14, and then transmitted to the display screen 13, in the same process as the process in which the video format converter 12 processes the external video signal onto which the screen menu data are superimposed, so a representation thereof has not been illustrated in Fig.4.

An embodiment of the disclosure provides a data displaying method including: receiving an external video signal from a video signal source external to an audio and video playing device; superimposing the external video signal onto screen menu data generated by the audio and video playing device to generate a superimposed signal, converting the format of the superimposed signal; and displaying the superimposed signal after format converted.

In a possible implementation of the method according to an embodiment of the disclosure, the method further includes: converting the superimposed signal into a high-definition and high-frame-rate video signal; and displaying the superimposed signal after format converted, including displaying the high-definition and high-frame-rate video signal.

In a possible implementation of the method according to an embodiment of the disclosure, converting the format of the superimposed signal includes: converting the superimposed signal into a signal with the V-by-One format.

An embodiment of the disclosure provides another audio and video playing device including a processor and a memory, where the memory stores therein program for performing the steps of: receiving an external video signal from a video signal source external to an audio and video playing device; superimposing the external video signal onto screen menu data generated by the audio and video playing device to generate a superimposed signal, converting the format of the superimposed signal; and displaying the superimposed signal after format converted; and the processor is configured to perform the program stored in the memory.

In a possible implementation of the audio and video playing device according to an embodiment of the disclosure, the memory further stores therein program for performing the steps of: converting the superimposed signal into a high-definition and high-frame-rate video signal; and displaying the format-converted superimposed signal, including displaying the high-definition and high-frame-rate video signal.

In a possible implementation of the audio and video playing device according to an embodiment of the disclosure, the memory further stores therein program for performing the step of: converting the superimposed signal into a signal with the V-by-One format.

The embodiments of the apparatus described above are merely exemplary, where the units described as separate components may or may not be physically separate, and the components illustrated as elements may or may not be physical units, that is, they can be collocated or can be distributed onto a number of network elements. A part or all of the modules can be selected as needed in reality for the purpose of the solution according to the embodiments of the disclosure. This can be understood and practiced by those ordinarily skilled in the art without any inventive effort.

Those ordinarily skilled in the art can appreciate that all or a part of the steps in the methods according to the embodiments described above can be performed by program instructing relevant hardware, where the programs can be stored in a computer readable storage medium, and the programs can perform one or a combination of the steps in the embodiments of the method upon being executed; and the storage medium includes an ROM, an RAM, a magnetic disc, an optical disk, or any other medium which can store program codes.

Lastly it shall be noted that the respective embodiments above are merely intended to illustrate but not to limit the technical solution of the disclosure; and although the disclosure has been described above in details with reference to the embodiments above, those ordinarily skilled in the art shall appreciate that they can modify the technical solution recited in the respective embodiments above or make equivalent substitutions to a part of the technical features thereof; and these modifications or substitutions to the corresponding technical solution shall also fall into the scope of the disclosure as claimed.

## Claims

1. An audio and video playing device, comprising a processor, an video format converter, and a display screen, wherein:
the processor is configured to generate screen menu data, and transmit the generated screen menu data to the video format converter;
the video format converter coupled with the processor is configured to superimpose the screen menu data output by the processor onto a received external video signal from a video signal source external to the processor, convert the superimposed signal into a converted signal which format can be identified by the display screen, and transmit the converted signal to the display screen; and
the display screen is configured to display the received signal.

2. The audio and video playing device according to claim 1, wherein the processor is electrically provided with a first video format input interface, and at least one video format output interface, the first video format input interface coupled with a primary signal source is configured to receive a primary audio signal and a primary video signal input by the primary signal source, and the processor is configured to superimpose the generated screen menu data onto the primary video signal of the primary signal source, and output the primary video signal onto which the screen menu data are superimposed to the video format converter via the video format output interface; and
the video format converter is further configured to convert the superimposed primary video signal output from the processor into the signal which format can be identified by the display screen, and transmit the format-converted signal to the display screen.

3. The audio and video playing device according to claim 2, wherein an audio system further coupled with the processor is configured to play the primary audio signal of the primary signal source.

4. The audio and video playing device according to claim 1 or 2, wherein the video format converter is electrically arranged with an external audio and video input interface, coupled with the external signal source, configured to receive an external audio signal and the external video signal from the external signal source.

5. The audio and video playing device according to claim 4, wherein an audio system is further coupled with the processor, the video format converter is configured to transmit the external audio signal to the processor, and the processor is configured to output the received external audio signal to the audio system for playing.

6. The audio and video playing device according to claim 1, 2 or 5, wherein the audio and video playing device further comprises a frame rate conversion/motion estimation and motion compensation chip configured to convert the signal output by the video format converter into a high-resolution and high-frame-rate video signal, and transmit the high-resolution and high-frame-rate video signal to the display screen.

7. The audio and video playing device according to claim 1, wherein the processor is configured to output the screen menu data to the video format converter via a universal serial bus interface.

8. The audio and video playing device according to claim 1, wherein the processor is configured to output the screen menu data to the video format converter via a high-definition multimedia interface.

9. The audio and video playing device according to claim 2, wherein the video format output interface comprises one of a Mobile High-definition Link, MHL, interface, a High Definition Multimedia Interface, HDMI, a Low Voltage Differential Signaling, LVDS, interface, a Display Port, DP, an Embedded Display Port, EDP, a Mobile Industry Processor Interface-Display Serial Interface, MIPI DSI, a Transistor-Transistor Logic, TTL, interface, and a combination thereof.

10. The audio and video playing device according to claim 4, wherein the external audio and video input interface comprises one of a Mobile High-definition Link, MHL, interface, a High Definition Multimedia Interface, HDMI, a Low Voltage Differential Signaling, LVDS, interface, a Display Port, DP, an Embedded Display Port, EDP, a Mobile Industry Processor Interface-Display Serial Interface, MIPI DSI, a Transistor-Transistor Logic, TTL, interface, and a combination thereof.

11. The audio and video playing device according to claim 1 or 4, wherein the format which can be identified by the display screen is V-by-One.

12. A data displaying method, comprising:
receiving an external video signal from a video signal source external to an audio and video playing device;
superimposing screen menu data generated by the audio and video playing device onto the external video signal to generate a superimposed signal, converting the format of the superimposed signal; and
displaying the superimposed signal after format converted.

13. The method according to claim 12, wherein the method further comprises:
converting the superimposed signal into a high-definition and high-frame-rate video signal; and
displaying the superimposed signal after format converted, comprising displaying the high-definition and high-frame-rate video signal.

14. The method according to claim 12, wherein converting the format of the superimposed signal comprises: converting the superimposed signal into a signal with the V-by-One format.

15. An audio and video playing device, comprising a processor and a memory, wherein:
the memory stores therein program for performing the steps of:
receiving an external video signal from another video signal source than the audio and video playing device; superimposing screen menu data generated by the audio and video playing device onto the external video signal to generate a superimposed signal, converting the format of the superimposed signal and displaying the superimposed signal after format converted; and
the processor is configured to perform the program stored in the memory.

16. The audio and video playing device according to claim 15, wherein the memory further stores one or more programs including instructions for:
converting the superimposed signal into a high-definition and high-frame-rate video signal; and
displaying the superimposed signal after format converted, comprising displaying the high-definition and high-frame-rate video signal.

17. The audio and video playing device according to claim 15, wherein the memory further stores one or more programs including instructions for: converting the superimposed signal into a signal with the V-by-One format.

18. A storage medium, storing therein program for performing the method according to any one of claims 12 to 14.
